# EUROPÄISCHE PATENTSCHRIFT

(11) **EP 2 200 864 B1**
(45) Veröffentlichungstag und Bekanntmachung des Hinweises auf die Patenterteilung: **29.05.2013**
(21) Anmeldenummer: 08842208.4
(22) Anmeldetag: 17.10.2008
(51) Int. Cl.: B60N 2/02, F16H 13/04, B60N 2/225, F16H 1/32, F16H 13/12

(54) **GETRIEBESTUFE**
GEAR STAGE
ÉTAGE D'ENGRENAGE

(30) Priorität: 23.10.2007 DE 102007051031; 16.11.2007 DE 102007056391
(43) Veröffentlichungstag der Anmeldung: 30.06.2010
(73) Patentinhaber: KEIPER GmbH & Co. KG, 67657 Kaiserslautern (DE)
(72) Erfinder: SCHÜLER, Rolf, 42579 Heiligenhaus (DE); BOSSMANNS, Bernd, 40699 Erkrath (DE); KALMUS, Karsten, 44799 Bochum (DE)
(74) Vertreter: Kalkoff & Partner
(86) Internationale Anmeldenummer: PCT/DE2008/001765
(87) Internationale Veröffentlichungsnummer: WO 2009/052812

(56) Entgegenhaltungen:
- EP-A- 1 323 909
- WO-A-2007/022909
- CH-A- 229 919
- GB-A- 109 463

## Beschreibung

Die Erfindung betrifft eine Getriebestufe, insbesondere eines Fahrzeugsitzes, mit den Merkmalen des Oberbegriffs des Anspruches 1.

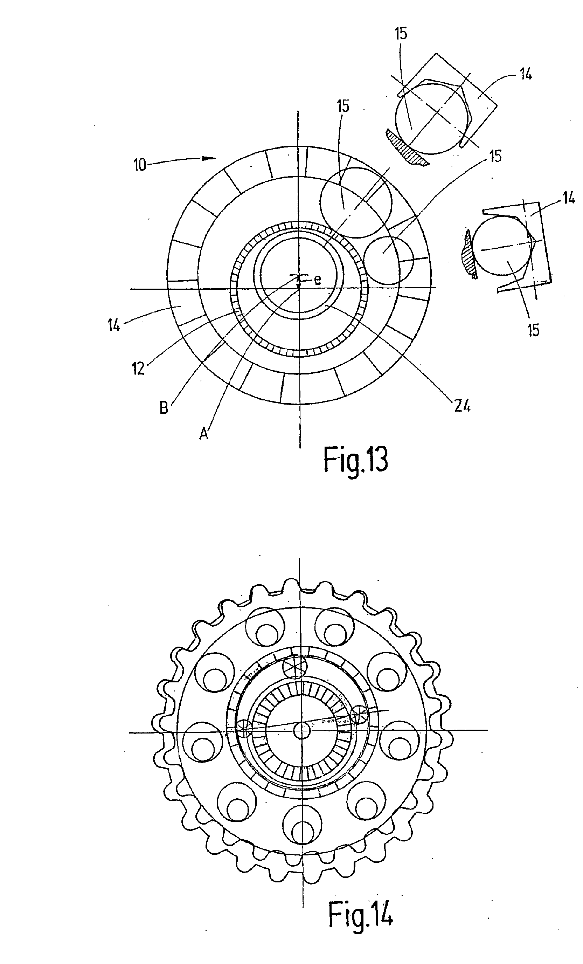

Bei elektrischen Stellantrieben für Sitzeinsteller sind Getriebestufen bekannt, die als Wälzexzenterstufe ausgebildet sind und die als Zwischengetriebestufen oder Antriebselemente zur Erzeugung einer umlaufenden Exzentrizität für verzahnte Getriebestufen Verwendung finden. Eine derartige bekannte Getriebestufe, welche als Antrieb einer zweiten Getriebestufe mit umlaufender Exzentrizität dient, ist in Fig. 14 dargestellt.

Obwohl die erwarteten Eigenschaften solcher Wälzexzenterstufen, nämlich Übersetzung im Bereich 1.5 bis 7 bei hohem Wirkungsgrad und geringem Geräuschniveau sehr wohl in der Praxis realisiert wurden, beinhaltet dieses Konzept dennoch Nachteile, die nur mit vergleichsweise hohem Aufwand kompensiert werden können. Die für ein präzises und gleichförmiges Abwälzen des verzahnten Ritzels im Hohlrad erforderliche Exzentrizität, deren Betrag natürlich möglichst präzise konstant bleiben muss, entsteht bei den bekannten Lösungen durch die Kombination verschiedener Geometrien - beispielsweise den Antriebskugeln, die in Fig. 14 das Ritzel nach oben drücken, einer Maximalbegrenzung dieser Bewegung durch die Verzahnung, die Abtriebsbolzen in den Ritzelbohrungen oder ein nicht dargestelltes Druckstützlager zwischen Antrieb und Abtrieb sowie einer Minimalbegrenzung beispielsweise durch eine Stützkugel. In Summe führt die relativ große Anzahl der die Exzentrizität bildenden Bauteile durch Toleranzen, lastabhängige Verformungen und innere Verspannungen zu einem über alle Betriebsbedingungen betrachtet recht sensiblen und störanfälligen System, das vermutlich unter Großserienbedingungen nur mit hohem Aufwand auf ein gutes Qualitätsniveau zu heben ist.

Als weiterer prinzipieller Nachteil ist zu nennen, dass ein solcher Wälzexzenter, als ein in einer Ebene und mit einem einzigen Ritzel (wie in Fig. 14 dargestellt) arbeitendes Antriebselement gut und einfach darstellbar ist, die radialen Lagerkräfte, proportional zum Gesamtabtriebsmoment, jedoch direkt und vollständig von dem mit großer Drehzahl rotierenden Rotorlager aufgenommen werden müssen und dort bei steigender Belastung zu steigenden Verlustleistungen und damit sinkendem Wirkungsgrad unter höherer Betriebslast führen. Werden hingegen in bekannter Art und Weise zwei oder im Idealfall drei Ritzel in Ebenen übereinander angeordnet, so können sich die Radialkräfte gegenseitig abstützen - dies jedoch ist mit der dargestellten Ausführung nicht durch einfaches übereinander Anordnen gleichartiger Stufen möglich, denn selbst minimale geometrische Unterschiede der beteiligten Bauteile führen zu prinzipiell unterschiedlichen Übersetzungen und damit bei längerem Betrieb zu einem Phasenversatz der Getriebestufen zueinander bzw. bei erzwungener Synchronität zu Verspannungen und somit zu Verlusten.

Eine Getriebestufe der eingangs genannten Art ist aus der GB 109,463 A bekannt. Zwischen dem Antrieb und dem Abtrieb sind zwei Wälzkörper angeordnet, von denen jeweils eines mittels eines Schalthebels in beidseitigen Kontakt gebracht werden kann. Aus der EP 1 323 909 A2 ist eine für einen Turbolader verwendete Getriebestufe bekannt, bei welcher die Lage der Exzentrizität zwischen Antrieb und Abtrieb bezüglich des Gehäuses aufgrund gehäusefeste Lager räumlich fest ist.

Der Erfindung liegt die Aufgabe zu Grunde, eine Getriebestufe der eingangs genannten Art zu verbessern. Diese Aufgabe wird erfindungsgemäß durch eine Getriebestufe mit den Merkmalen des Anspruches 1 gelöst. Vorteilhafte Ausgestaltungen sind Gegenstand der Unteransprüche.

Der Antrieb und der Abtrieb sind um zueinander parallele Achse drehbar, welche zueinander um die Exzentrizität versetzt sind. Der Antrieb und der Abtrieb sind in räumlicher Hinsicht ineinander angeordnet (geschachtelt) und mit den einander zugewandten Flächen wirksam. Dabei kann der Antrieb innerhalb des Abtriebs angeordnet sein (dann wirkt den Antrieb mit seiner Außenkontur und der Abtrieb mit seiner Innenkontur), oder die Verhältnisse sind genau umgekehrt. Die Kugel oder der andere Wälzkörper ist in dem sich (aufgrund der Exzentrizität) bildenden Keilspalt zwischen Antrieb und Abtrieb angeordnet und innerhalb des Keilspaltes beweglich, insbesondere in den Keilspalt hinein und aus dem Keilspalt heraus beweglich, wobei diese Bewegung in der Regel in einer Ebene senkrecht zu den Achsen von Antrieb und Abtrieb erfolgt.

Indem die Lage der Exzentrizität bezüglich des Gehäuses bei dieser ersten, für die Geräuschentwicklung maßgeblichen Getriebestufe räumlich fest ist, was vorzugsweise durch eine fixe, d.h. räumlich feste, Lagerung von Antrieb und Abtrieb in einem gemeinsamen Gehäuse erreicht wird, stehen die Kraftangriffspunkte im Raum fest. Mit dieser extrem genauen Definition des Betrages und der Richtung der Exzentrizität wird das Exzentrizitätsmaß während des Umlaufs zwangsläufig exakt eingehalten, wodurch periodische Änderungen der Lastverhältnisse und eine Geräusch- und Vibrationsentwicklung aufgrund der insgesamt stabilen Laufeigenschaften vermieden werden. Mit dieser geometrisch zueinander festen Lage der Exzentrizität zwischen Antrieb und Abtrieb, einer exakten, leichtgängigen Lagerung dieser beiden Bauteile zueinander und der Verwendung einer Kugel (oder eines anderen Wälzkörpers) im Keilspalt wird zum einen eine Übersetzung bei hohem Wirkungsgrad bewirkt und zum anderen eine dem jeweiligen Drehmoment proportionale Radialkraft als Vorspannung auf den Rotor ausgeübt, was im Betrieb die Geräusche minimiert.

Die erfindungsgemäße Getriebestufe basiert auf dem gleichen Grundprinzip wie die bekannte Getriebestufe. So kann die Übersetzung durch Konturen am Antrieb und/oder Abtrieb eingestellt werden, beispielsweise durch eine Nut, innerhalb derer die Kugel läuft. Die erfindungsgemäße Getriebestufe verbessert aber die Eigenschaften bezüglich Übersetzung, Wirkungsgrad und Geräuscharmut und spannt wie gewünscht den Rotor immer radial vor, wodurch die beschriebenen Nachteile eliminiert werden, insbesondere die Geräuschentwicklung bei Ec-Antrieben mit Rotoren geringer Masse und die geringen Wirkungsgrade von hochuntersetzenden, einstufigen Differenzialgetrieben vermieden werden. Über das Grundprinzip hinaus bietet sich eine Vielzahl möglicher Zusatzfunktionen und Zusatzeigenschaften, insbesondere diverse Möglichkeiten der Übersetzungsänderung und Übersetzungssteuerung sowie einfache Lösungen für Kupplungsfunktionen, die im Gesamtkontext der Sitzantriebstechnik vielfältige Vorteile mit sich bringen können. Pro gewünschter Antriebsrichtung ist vorzugsweise genau ein Wälzkörper, beispielsweise eine Rolle, vorzugsweise aber eine Kugel, vorgesehen, um Überbestimmungen zu vermeiden. Sofern nur eine Antriebsrichtung benötigt wird, ist auch nur eine einzige Kugel oder ein einziger anderer Wälzkörper notwendig.

Aus der FR 601.616 ist zwar eine prinzipiell ähnlich aussehende Getriebestufe bekannt, jedoch sind die über den vollen Umfang verteilten Wälzkörper als Planeten auf einem Steg gelagert, welcher im Betrieb rotiert, so dass die Exzentrizität umläuft.

Die erfindungsgemäße Getriebestufe wird vorzugsweise in einem Stellantrieb für einen Fahrzeugsitz verwendet, beispielsweise einem Lehnenneigungseinsteller, einem Höheneinsteller oder einem Neigungseinsteller. Der Stellantrieb umfasst einen Antriebsmotor und die erfindungsgemäße Getriebestufe und treibt beispielsweise ein lastaufnehmendes Getriebe an, wie in der DE 10 2004 019 466 B4 offenbart, welches einen Bestandteil der in sich beweglichen Sitzstruktur bildet. Der Stellantrieb kann gegebenenfalls noch eine zweite oder weitere Getriebestufen aufweisen, welche der erfindungsgemäßen ersten Getriebestufe nachgeschaltet und dem lastaufnehmenden Getriebe vorgeschaltet sind. Das lastaufnehmende Getriebe kann eine Drehbewegung oder eine Linearbewegung oder einer Überlagerung beider Bewegungen ausführen. Der Stellantrieb kann auch als Aktuator ausgebildet sein oder einen solchen antreiben, beispielsweise eine Seiltrommel drehen, die ein Seil für eine Entriegelung aufwickelt. Es sind auch Einsätze außerhalb eines Fahrzeugsitzes denkbar, beispielsweise bei Fensterhebern und verstellbaren Spiegeln.

Im folgenden ist die Erfindung anhand eines in der Zeichnung dargestellten Ausführungsbeispiels mit Ergänzungen und Abwandlungen näher erläutert. Es zeigen
- Fig. 1: einen Querschnitt der erste Getriebestufe, wobei der Übersichtichkeit halber nur eine Kugel und rechts außen deren Radiallastdarstellung eingezeichnet ist.
- Fig. 2: einen Längsschnitt durch einen Stellantrieb mit Antriebsmotor, erster Getriebestufe und zweiter Getriebestufe,
- Fig. 3: einen Längsschnitt durch eine als Abtrieb der ersten Getriebestufe und als Antriebswelle der zweiten Getriebestufe dienende Hülse,
- Fig. 4: einen Querschnitt der ersten Getriebestufe mit einer Spiraldruckfeder als Anpresselement,
- Fig. 5: einen Querschnitt der ersten Getriebestufe mit einer Blattfeder als Anpresselement,
- Fig. 6: einen Querschnitt der ersten Getriebestufe mit Magneten als Anpresselementen,
- Fig. 7: eine schematische Seitenansicht eines Fahrzeugsitzes in einer hinteren Sitzreihe,
- Fig. 8: einen Querschnitt der ersten Getriebestufe mit Dämpfungs- und Überholfunktion,
- Fig. 9: einen Querschnitt der ersten Getriebestufe mit elektrischer Kupplungsfunktion,
- Fig. 10: einen Querschnitt der ersten Getriebestufe mit mechanischer Kupplungsfunktion mittels Schaltgabel,
- Fig. 11: einen Querschnitt der ersten Getriebestufe mit mechanischer Kupplungsfunktion mittels Reibkontakt,
- Fig. 12: einen Querschnitt der ersten Getriebestufe mit einem Gehäuse mit unterschiedlichen Lagersteifigkeiten,
- Fig. 13: einen Querschnitt der ersten Getriebestufe mit unterschiedlichen Übersetzungsverhältnissen sowie zwei Längsschnitte im Bereich der beiden Kugeln, und
- Fig. 14: einen Querschnitt einer Getriebestufe nach dem Stand der Technik.

Ein Stellantrieb 1 für einen Fahrzeugsitz 3 weist ein Gehäuse 5 und einen im Gehäuse 5 angeordneten Antriebsmotor 7 auf. Das Gehäuse 5 ist in der Regel mehrteilig, aber mit so wenig Teilen wie möglich ausgebildet. Der vorliegend als EC-Innenläufer-Motor ausgebildete Antriebsmotor 7 umfasst einen Rotor 8, welcher um eine erste Achse A drehbar im Gehäuse 5 gelagert ist und welcher Permanentmagnete trägt, und einen elektronisch kommutierten Stator 9. Die Lagerung des Rotors 8 im Gehäuse 5 erfolgt mittels zweier als Wälzlager ausgebildeter Rotorlager 8a.

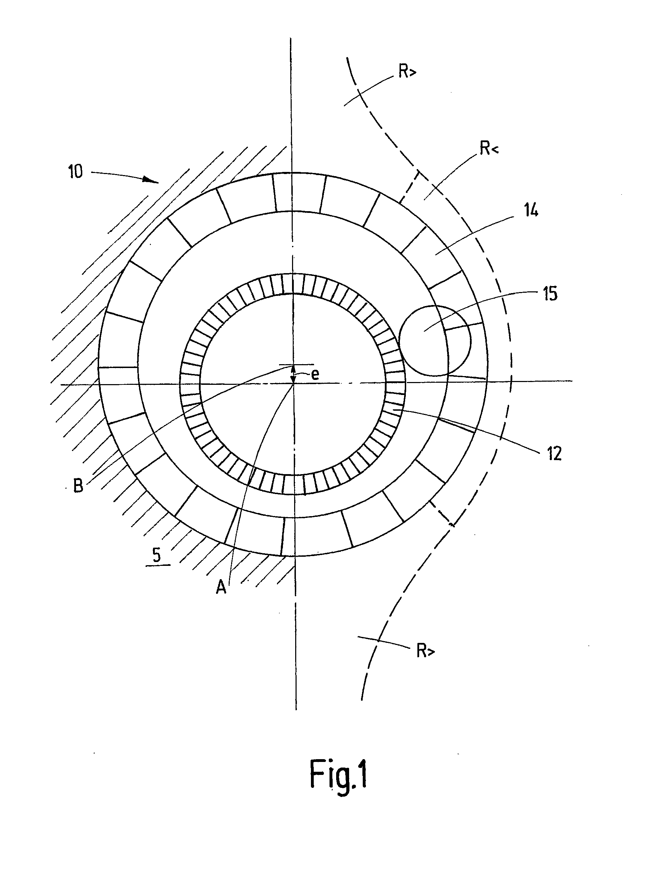

Der Stellantrieb 1 weist ferner eine erste Getriebestufe 10 auf, welche einen um die erste Achse A drehbaren Antrieb 12 und einen um eine dazu parallele zweite Achse B drehbaren Abtrieb 14 umfasst, die jeweils im Gehäuse 5 gelagert sind. Der vorliegend ringförmige Antrieb 12 ist vorzugsweise einstückig mit dem Rotor 8 des Antriebsmotors 7 ausgeführt und dadurch mittels der Rotorlager 8a im Gehäuse 5 wälzgelagert. Es ist aber auch eine gesonderte Ausbildung von Rotor 8 und Antrieb 12 mit geeigneter Kopplung und eine gesonderte Lagerung im Gehäuse 5 möglich. Der vorliegend ebenfalls ringförmige Abtrieb 14 ist mittels eines ebenfalls als Wälzlager ausgebildeten Abtriebslagers 14a im Gehäuse 5 gelagert. Dabei sind die erste Achse A und die zweite Achse B um eine Exzentrizität e voneinander beabstandet, indem die Rotorlager 8a und das Abtriebslager 14a im Gehäuse 5 fix zueinander angeordnet sind. In der Darstellung von Fig. 1 ist die zweite Achse B gegenüber der ersten Achse A nach oben verlegt. Die Lage der Exzentrizität e ist somit bezüglich des Gehäuses 5 räumlich fest.

Bezüglich eines durch die zweite Achse B definierten Zylinderkoordinatensystems ist der einen kleineren Durchmesser aufweisende Antrieb 12 radial innen und der einen größeren Durchmesser aufweisende Abtrieb 14 radial außen angeordnet. Die Kraftübertragung zwischen dem Antrieb 12 und dem Abtrieb 14 erfolgt in der vorliegenden Ausbildung als Reibradgetriebestufe mittels wenigstens einer Kugel 15 (oder eines anderen Wälzkörpers), die zwischen Antrieb 12 und Abtrieb 14 angeordnet ist, wo sich zwischen Antrieb 12 und Abtrieb 14 ein gekrümmter, keilförmiger Freiraum bildet, kurz als Keilspalt bezeichnet. Bei Rotation des Antriebs 12 wird die Kugel 15 in Richtung dieses Keilspaltes (bei der Darstellung von Fig. 1 im Uhrzeigersinn) automatisch eingeklemmt, dreht sich dann um die eigene Achse und treibt somit den Abtrieb 14 untersetzt an. Vorliegend ist für jede Antriebsrichtung genau eine Kugel 15 (oder ein anderer Wälzkörper) zwischen Antrieb 12 und Abtrieb 14 vorgesehen, welche jeweils (bis auf die Drehrichtung) gleichwirkend sind,

Bezüglich der Übersetzung dieser ersten Getriebestufe 10, bei der nun alle beteiligten Bauteile ausschließlich um Ihre eigene Achse rotieren, gelten die bekannten Verhältnisse, nämlich zum einen das Verhältnis der Umfänge bzw. Radien von Antrieb 12 zu Abtrieb 14 und zum anderen, multiplikativ, das Übersetzungsverhältnis der Kugel 15 selbst. Durch Konturen am Antrieb 12 und/oder Abtrieb 14 können die Kontaktstellen zur Kugel 15 aus derjenigen Ebene heraus verlagert werden, die senkrecht zu den Achsen A und B steht und in Fig. 1 als Zeichenebene dient. Als Projektion in diese Ebene ergeben sich dann andere effektive Radien der Kugel 15, d.h. Antriebsradius und Abtriebsradius, womit sich das Übersetzungsverhältnis der Kugel 15 ändert. Vorzugsweise ist der Abtrieb 14 auf der - radial nach innen weisenden - wirksamen Fläche mit einer Kontur, beispielsweise einer Rinne oder V-förmigen Nut oder dergleichen, versehen, innerhalb derer die Kugel 15 läuft und dabei an schrägen Wänden abrollt. Dadurch kann der Abtriebsradius der Kugel 15 reduziert, sogar kleiner als der Antriebsradius eingestellt, und somit das Untersetzungsverhältnis beeinflusst werden. Beispielsweise kann die Verwendung einer V-förmigen Nut am Antrieb und einer zylindrischen Fläche am Abtrieb eine Übersetzung ins Schnelle erfolgen. Dies ist - neben der direkten Übertragung der Radialkräfte - der Vorteil einer Reibradgetriebestufe gegenüber einer Zahnradgetriebestufe.

Bei als konstant betrachtetem Antriebsdrehmoment ergibt sich durch die Exzentrizität e ein Winkel zwischen den Kraftwirklinien der an der Kugel 15 wirkenden Kräfte und eine dem Tangens dieses Winkels proportionale Radialkraft, deren Betrag und Richtung als Radiallastdarstellung in Fig. 1 auf der Außenseite des Abtriebs 14 aufgetragen ist. Der Betrag dieser Radialkraft nimmt über alle möglichen Kugelpositionen betrachtet zwei mal einen Maximalwert (theoretisch unendlich !) und einen Minimalwert an. Befindet sich die Kugel 15 beispielsweise in Fig. 1 in der Nähe der 12 bzw. 6 Uhr Stellung, d.h. in einem verbotenen Winkelbereich R>, so ist der Keilwinkel minimal, und kleinste tangentiale Antriebskräfte des Antriebs 14 führen zu exorbitanten Radialkräften und bei realen Bauteilen mit begrenzten Festigkeiten somit zu extremen Verformungen. Im Umkehrschluss bedeutet dieser Zusammenhang für die Lagerung des Antriebs 12 und Abtriebs 14, dass für reale Lager mit maximal zulässigen Lagerkräften bei gegebenem Maximaldrehmoment des Antriebs 12 die Kugel 15 nur in einem exakt definierbaren, erlaubten Winkelbereich R< (in der Radiallastdarstellung von Fig. 1 etwa zwischen 13 Uhr und 16.30 Uhr) betrieben werden darf. Gleiches gilt natürlich für die Belastung der Kugel 15 selbst.

Die beschriebenen Radialkräfte, die in genau einem Punkt ein Minimum erreichen, müssen in den Lagerungen und im Kugelkontakt aufgenommen werden und führen dort zwangsläufig zu Verlusten. Eine bevorzugte Ausführungsform mit maximalem Wirkungsgrad stellt folglich die Variante dar, bei der die Kugellage genau im Bereich der minimalen Radialkräfte angeordnet ist, welcher neben dem Betrag der Exzentrizität e auch von den Durchmesserverhältnissen abhängig ist.

Grundsätzlich ist die beschriebene erste Getriebestufe 10 mit Fixlagenexzentrizität in beliebigen Kombinationen mit anderen Getriebestufen einsetzbar. Vorliegend weist der Stellantrieb 1 eine zweite Getriebestufe 20 auf. Die erste Getriebestufe 10 dient als Vorschaltstufe für die abtriebsseitig angeordnet zweite Getriebestufe 20.

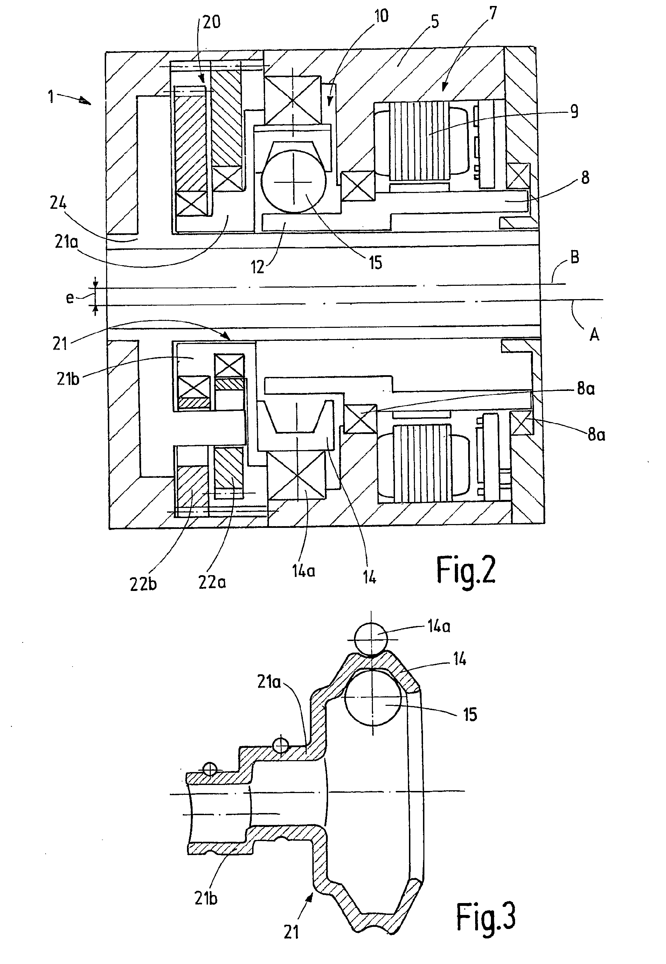

Die zweite Getriebestufe 20 ist vorliegend als verzahntes Exzenterumlaufgetriebe ausgebildet. Eine um die zweite Achse B drehbare Antriebswelle 21 lagert mittels eines ersten Exzenterabschnitts 21a und eines entlang der zweiten Achse B axial versetzten zweiten Exzenterabschnitts 21b zwei vorzugsweise um 180° zueinander versetzte und in zwei Ebenen angeordnete Ritzel 22a und 22b. Sowohl das erste Ritzel 22a als auch das zweite Ritzel 22b, welche vorzugsweise gleich ausgebildet sind, sind außenverzahnt und kämmen mit einer Innenverzahnung des Gehäuses 5, welche gegenüber den Ritzeln 22a und 22b eine um wenigstens eins größere Anzahl von Zähnen aufweist. Bei einer Drehung der mittig und fest mit dem Abtrieb 14 verbundenen Antriebswelle 21 führen die Ritzel 22a und 22b eine Abwälzbewegung am Gehäuse 5 aus. Die Ritzel 22a und 22b wirken mittels Bolzen und Bohrungen auf eine gemeinsame, als Hohlwelle ausgebildete Abtriebswelle 24, welche sich dann ebenfalls dreht. Vorliegend sind die Antriebswelle 21 und auch die Abtriebswelle 23 konzentrisch zur zweiten Achse B, so dass letztlich der Antriebsmotor 7 zu der zweistufigen Getriebebaugruppe aus erster Getriebestufe 10 und zweiter Getriebestufe 20 insgesamt um die Exzentrizität E versetzt angeordnet ist, welche fix in Lage und Betrag von dem gemeinsamen Gehäuse 5 vorgegeben ist. Die recht hohe Anzahl von Wälzlagern in Fig. 2 dient der Steigerung des Gesamtwirkungsgrades. Es ist jedoch in abgewandelten Ausführungen auch der Einsatz von Gleitlagern möglich.

Als konstruktive Detaillösung ist vorzugsweise vorgesehen, den ringförmigen Abtrieb 14 der ersten Getriebestufe 10 und die damit verbundene, als Doppelexzenterwelle ausgebildete Antriebswelle 21 der zweiten Getriebestufe 20 einstückig als Hülse mit allen erforderlichen Kugellaufrillen auszuführen und diese vorzugsweise durch spanlose Umform- und Kalibrierprozesse herzustellen. Fig. 3 soll dies veranschaulichen.

Bedingt durch die nun zum Gehäuse 5 räumlich feste Lage der Exzentrizität e und somit auch der Kugeln 15 unter Betriebsbedingungen ergibt sich eine Vielzahl neuer Lösungsmöglichkeiten, sowohl hinsichtlich der konstruktiven Ausführung als auch hinsichtlich Gesamtfunktionalität. Im Folgenden werden einige vorteilhafte Aspekte erläutert.

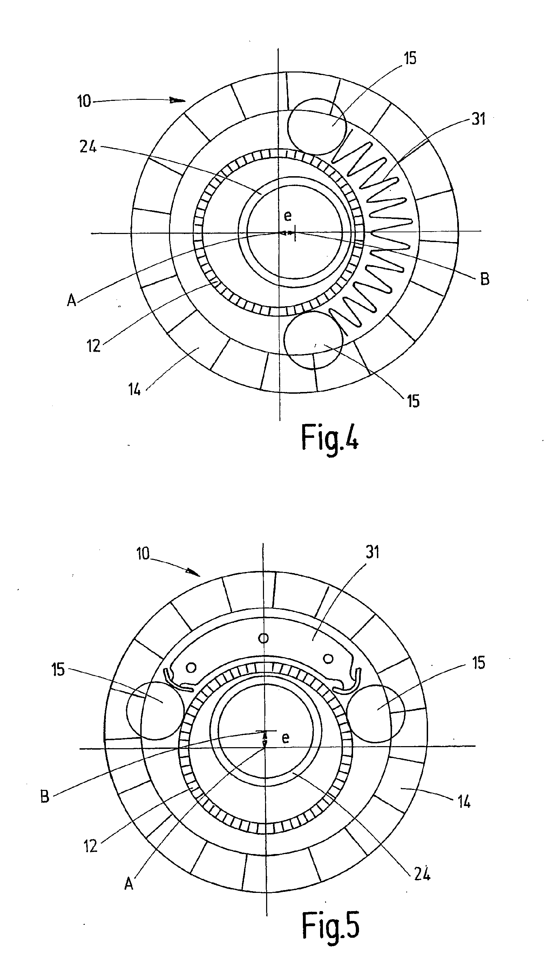

Bei den bekannten, umlaufenden Wälzexzenterausführungen laufen die Kugeln 15 im Raum um, und das Anpresselement 31 zur Erzeugung einer stets vorhandenen, geringen Anpresskraft für die Kugeln 15 muss zwangsläufig ebenfalls mit umlaufen. Eine einfache und häufig eingesetzte Lösung sind hierbei Spiraldruckfedern, wie in Fig. 4 dargestellt. Jedoch neigen die Spiraldruckfedern zu Eigenschwingungen und finden sowohl zu den Kugeln 15 als auch zum Abtrieb 14 zwingend verlustbehafteten Kontakt. Aufgrund der nun zum Gehäuse 5 fixen Lage sind deutlich vorteilhaftere Ausführungen für das Anpresselement 31 realisierbar, wie beispielsweise die Verwendung einer gehäusefesten Blattfeder aus Metall oder Kunststoff mit minimaler Kugelkontaktfläche, was in Fig. 5 dargestellt ist.

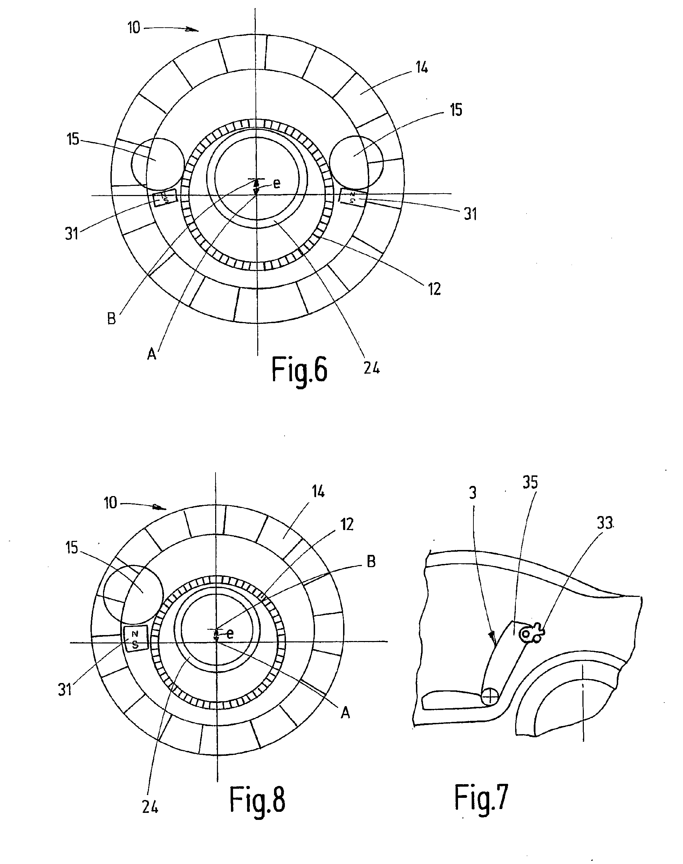

Als möglicherweise wirtschaftlich schlechtere, technisch jedoch elegantere, nahezu verlust- und geräuschfreie Ausführung bietet sich bei Einsatz von Kugeln 15 aus Stahl die gehäusefeste Positionierung von Magneten als Anpresselemente 31 zur Erzeugung einer kontaktfreien Anpresskraft an, wie in Fig. 6 dargestellt.

In allen Fällen werden die Kugeln 15 durch das oder die Anpresselemente 31 in den Keilspalt gedrückt oder gezogen und dadurch zugleich gegen Antrieb 12 und Abtrieb 14 gepresst. Konstruktionssystematisch betrachtet stellt die Kugel 15 mit ihren unter einem Winkel zueinander angreifenden Kräften letztlich gleichzeitig einen Klemmrollen- bzw. hier Klemmkugelfreilauf dar. Der Freilauf stellt eine selbstschaltende Kupplung dar. Im Betrieb, d.h. während der Antriebsbewegung, wird daher nur diejenige Kugel 15, die durch den Antrieb 12 weiter in den Keilspalt hinein bewegt wird, sowohl in Kontakt mit dem Antrieb 12 als auch mit dem Abtrieb 14 bleiben. Die gegenüberliegende Kugel 15 für die entgegengesetzte Antriebsrichtung wird trotz Anpresselement 31 aus dem ihr zugeordneten Keilspalt herausbewegt und verliert dann den doppelten Kontakt.

Die Wirkung als Klemmrollen- bzw. Klemmkugelfreilauf kann in einigen Fällen der Antriebstechnik durchaus in sinnvoller Kombination mitgenutzt werden. Fig. 7 zeigt den Fondbereich eines Kraftfahrzeuges mit einem elektrisch entriegelbaren Lehnenschloss 33 an der Oberkante der Lehne 35 des Fahrzeugsitzes 3. Zur komfortablen, schnellen Veränderung des Fahrzeuginnenraumes sind derartige Anordnungen bekannt, bei denen die Lehne 35 mit Federbelastung nach vorn eingebaut und lösbar verriegelt ist. Somit schwenkt die Lehne 35 bei elektrischer Auslösung des Lehnenschlosses 33 eigenständig nach vorne. Zur Wiederherstellung der dargestellten Position ist die Lehne 35 manuell wieder hochzuschwenken.

Eine weitere Komfortsteigerung dieser Funktion ist zum einen in einer ggf. kontrollierten Dämpfung der federbedingten Vorschwenkfunktion und zum anderen in einem elektrischen Wiederhochschwenken erreichbar. Beides kann mittels einer Variante des Stellantriebs 1 mit erfindungsgemäßer Ausbildung der ersten Getriebestufe 10 mit Fixlagenexzentrizität und in Reibradausführung erreicht werden, wenn die nachgeschalteten Getriebestufen nicht selbsthemmend sind, was in der beschriebenen Anwendung durchaus sinnvoll ist.

Fig. 8 zeigt eine Getriebevariante, die mit lediglich einer, in diesem Fall magnetisch vorbelasteten Kugel 15 arbeitet. Der Stellantrieb 1 mit dieser ersten Getriebestufe 10 ist in einen als Lehnenneigungseinsteller dienenden Beschlag integriert. Wird in der in Fig. 7 gezeigten Stellung die Lehne 35 an ihrer Oberkante elektrisch entriegelt, und schwenkt dann nach vorne, d.h. in Fig. 7 gegen den Uhrzeigersinn, so dreht sich der Abtrieb 14 in Fig. 8 ebenfalls entgegen dem Uhrzeigersinn, hält Kontakt zum Antrieb 12 und treibt somit den Rotor 8 an. Im vorliegenden Falle eines EC-Motors kann der Rotor 8 entweder mit keinem oder einem exakt kontrollierten Bremsmoment beaufschlagt werden, beispielsweise um eine maximale Schwenkgeschwindigkeit zu definieren oder kurz vor Ende des möglichen Bewegungswinkels gezielt die Bewegung abzubremsen. Soll später die Lehne 35 elektrisch wieder hochgeschwenkt werden, so wird der Rotor 8 vorliegend im Gegenuhrzeigersinn betrieben, und der Abtrieb 14 sowie die Lehne 35 drehen sich im Uhrzeigersinn in Fig. 7 und 8. Es besteht auch die Besonderheit, dass diese motorisch angetriebene Bewegung der Lehne 35 manuell überholt werden kann ("Überholfunktion"). Im Falle eines am Abtrieb 14 eingeleiteten Momentes, d.h. einer von außen aufgebrachten Beschleunigung des Abtriebs 14, öffnet sich nämlich der Klemmkugelfreilauf selbsttätig, d.h. die Kugel 15 bewegt sich aus dem Keilspalt heraus, der Antrieb 12 dreht leer und die Lehne 35 kann manuell hochgeschwenkt werden. Dies ermöglicht auch etwa bei Stromausfall oder in Notsituationen ein rein manuelles Hochschwenken der Lehne 35.

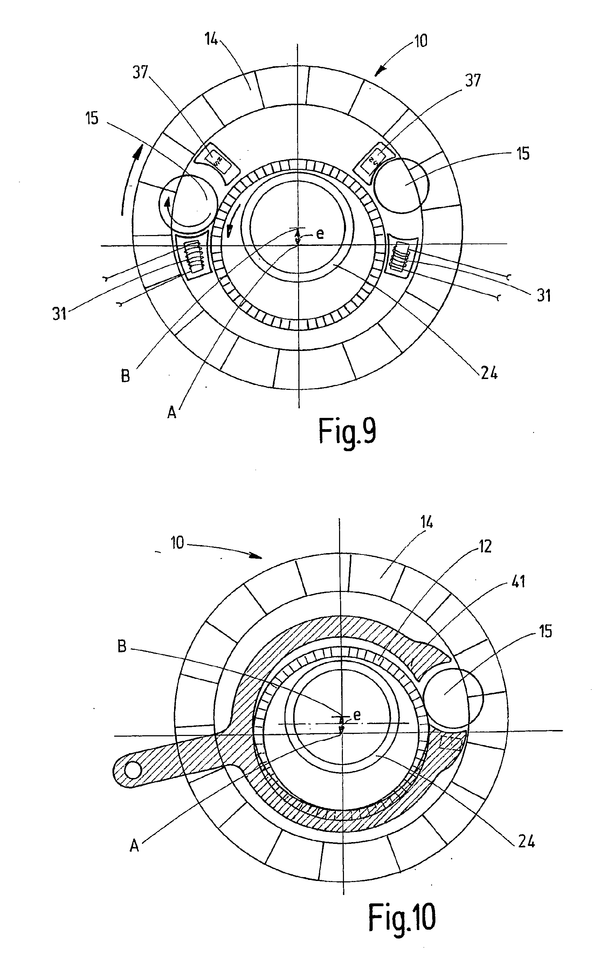

Aufgrund der physikalischen Verhältnisse an der Kugel 15, die im gerade beschriebenen Fall zu einem automatischen Auskuppeln der ersten Getriebestufe 10 führen, lässt sich diese erste Getriebestufe 10 auf einfachste Weise um eine weitere in der Antriebstechnik häufig erforderliche Funktion erweitern, nämlich die einer geschalteten Kupplungsfunktion, welche erforderlichenfalls sogar richtungsabhängig sein kann. Fig. 9 zeigt eine Anordnung, bei der beide Kugeln 15 unabhängig voneinander jeweils in eine passive und eine aktive Position geschaltet werden können. Für beide Kugeln 15 ist im oberen Bereich des Freiraumes zwischen Antrieb 12 und Abtrieb 14 eine Rückhaltevorrichtung 37 vorgesehen (hier vorliegend eine einfache Geometrie mit sehr schwachem Magnet). Die Rückhaltevorrichtung 37 positioniert die Kugel 15 in der Ruhestellung so, dass sie zu Antrieb 12 und/oder Abtrieb 14 (d.h. zumindest zu einem oder gegebenenfalls beiden Bauteilen) keinen Kontakt hat, wodurch in der Ruhestellung Antrieb 12 und Abtrieb 14 vollständig voneinander entkoppelt sind. Im unteren Bereich des Freiraumes sind zwei separate und separat schaltbare Elektromagnete als Anpresselemente 31 vorgesehen, die bei Aktivierung die jeweils zugeordnete Kugel 15 anziehen und somit den Kraftschluss für diese jeweilige Bewegungsrichtung schließen. Da die bei höheren Drehmomenten erforderlichen Kugelanpresskräfte sich aufgrund der Keilwirkung im Betrieb automatisch einstellen, reichen zum Schalten dieser Kupplung minimale Energien, die lediglich für "lockeren" Kontakt zu Bewegungsanfang sorgen müssen. Die als Anpresselemente 31 benutzten Elektromagnete können folglich im Betrieb wieder stromlos geschaltet werden.

Neben der gerade beschriebenen elektrischen Betätigung der Kupplungsfunktion ist auch eine mechanische Lösung realisierbar. Im Ausführungsbeispiel gemäß Fig. 10 werden beispielsweise Steuergabeln 41 verwendet, von denen nur eine dargestellt ist. Eine derartige Steuergabel 41 ist extern ansteuerbar. Die angesteuerten Steuergabeln 41 bringen die Kugeln 15 jeweils in aktive (in den Keilspalt hinein) oder passive (aus dem Keilspalt heraus) Positionen. Somit ermöglichen die Steuergabeln 41, den Antriebsmotor 7 abzukoppeln, um beispielsweise eine manuelle Schnellverstellung oder wiederum eine Notbetätigung zu erlauben, wie sie zuvor in Zusammenhang mit den Fig. 7 und 8 beschrieben ist.

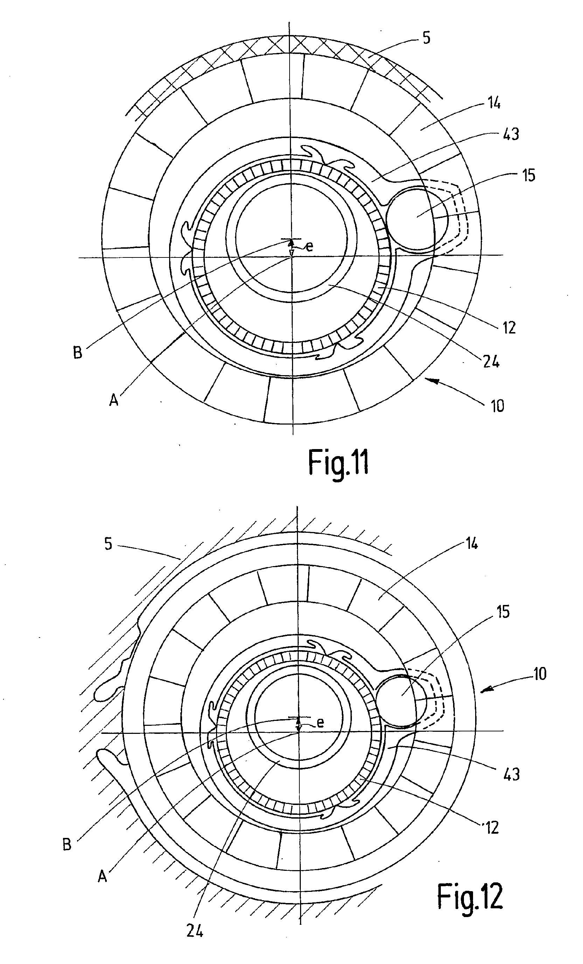

Eine weitere vorteilhafte Ausführung einer Kupplungsfunktion ist in Fig. 11 dargestellt, in der ein den Antrieb 12 umfassender, an drei Stellen zu diesem in leichtem Reibkontakt stehender Kugelführungsring 43 zu erkennen ist, welcher die Kugel 15 führt. Der Kugelführungsring 43 wird, bedingt durch den schwachen Reibkontakt zum Antrieb 12, tendenziell die Kugel 15 innerhalb des Freiraumes immer in die Antriebsrichtung des Rotors 8 zu bewegen versuchen (d.h. in den Keilspalt hinein) und folglich im eingekuppelten Zustand selbst, ebenso wie die Kugel 15, seine Winkellage beibehalten. Bei Drehrichtungsumkehr hingegen wird die Kugel 15 - aus ihrem bisherigen Kontakt gelöst - auf die Gegenseite geschwenkt. Die sich ergebende Einsparung einer zweiten Kugel 15 ist hierbei weniger von Bedeutung als die Tatsache, dass mit dieser Anordnung ohne weitere aktive Stellelemente oder Magnete das Getriebe völlig ausgekuppelt werden kann, indem der Rotor 8 (und damit der Antrieb 12) nach Abschluss der Antriebsbewegung um einen bekannten Winkel (in der Darstellung von Fig. 11 ca. 80° gegen den Uhrzeigersinn) zurückgedreht wird. Dies ermöglicht, Verspannungen in dem gesamten Stellantrieb 1 kontrolliert zu entlasten, und erlaubt beispielsweise eine Umhüllung der Antriebs- oder Abtriebslagerungen mit einem Elastomerring zwecks Reduzierung der Körperschallweiterleitung oder auch zwecks gezielter Steuerung der elastischen Verlagerungen der Getriebeelemente im Betrieb unter Last. Als Nebeneffekt ist hier anzumerken, dass eine solche Ausführung auch den Einsatz nichtmagnetischer Kugelmaterialien wie beispielsweise Keramik oder Kunststoff erlaubt.

Eine denkbare Ausführung mit einem Gehäuse 5, das mit bewusst unterschiedlichen Lagersteifigkeiten versehen ist, zeigt Fig. 12. Mit diesen - von den Raumrichtungen abhängigen - unterschiedlichen Lagersteifigkeiten können beispielsweise die Radialkräfte reduziert werden. Vorliegend handelt es sich um eine Abwandlung zu der Ausführung von Fig. 11. Insbesondere bei Verwendung von thermoplastischen Kunststoffen als Gehäusematerial empfiehlt sich das Auskuppeln der ersten Getriebestufe 10, um ein Materialkriechen über längere Stillstandszeiten bei hohen Temperaturen zu minimieren.

Mit den beschriebenen Möglichkeiten des Ein- und Auskuppelns von Kugeln 15 ergibt sich in Konsequenz, dass die erste Getriebestufe 10 auch als Getriebe mit unterschiedlichen, richtungsabhängigen oder schaltbaren Übersetzungsverhältnissen darstellbar ist. Fig. 13 zeigt beispielhaft eine gestufte Innenkontur des Abtriebs 14. In Kombination mit dem aufgrund der Exzentrizität e unterschiedlichen Abstand zum Antrieb 12 finden Kugeln 15 unterschiedlicher Größe zu dieser Innenkontur Kontakt. Somit können diese Übersetzungsstufen durch Auskuppeln der einen Kugel 15 und Einkuppeln der anderen Kugel 15 umgeschaltet werden. Im Bereich der Sitzantriebe sind bewegungsrichtungsabhängige Leistungs- bzw. Momentenbedarfe häufig der Fall. Mit dieser Möglichkeit des Umschaltens kann für unterschiedliche Lastsituationen (Sitzhöheneinsteller aufwärts- großes Moment, Sitzhöheneinsteller abwärts - kleines Moment) von vorne herein eine für jede Drehrichtung passende Übersetzung eingebaut werden. Nach dem gleichen Prinzip können auch mehr als zwei Übersetzungsverhältnisse eingebaut sein.

Alternativ zu der in Fig. 13 gezeigten Ausführung mit zwei Kugeln 15 unterschiedlicher Übersetzung in einem einzigen Abtrieb 14 können natürlich auch die Kontaktgeometrien des Antriebs 12 in gleichem Sinne definiert werden, oder es können ein oder mehrere Abtriebe 14 (oder Antriebe 12) axial übereinander angeordnet werden bzw. zwei unterschiedliche Konturen am Abtrieb 14 (oder Antrieb 12) vorgesehen sein. Anstelle der Kugeln 15 können auch andere Wälzkörper vorgesehen sein.

### Bezugszeichenliste

| | |
|---|---|
| 1 | Stellantrieb |
| 3 | Fahrzeugsitz |
| 5 | Gehäuse |
| 7 | Antriebsmotor |
| 8 | Rotor |
| 8a | Rotorlager |
| 9 | Stator |
| 10 | erste Getriebestufe |
| 12 | Antrieb |
| 14 | Abtrieb |
| 14a | Abtriebslager |
| 15 | Kugel |
| 20 | zweite Getriebestufe |
| 21 | Antriebswelle |
| 21a | erster Exzenterabschnitt |
| 21b | zweiter Exzenterabschnitt |
| 22a | erstes Ritzel |
| 22b | zweites Ritzel |
| 24 | Abtriebswelle |
| 31 | Anpresselement |
| 33 | Lehnenschloss |
| 35 | Lehne |
| 37 | Rückhaltevorrichtung |
| 41 | Steuergabel |
| 43 | Kugelführungsring |
| A | erste Achse |
| B | zweite Achse |
| e | Exzentrizität |
| R< | erlaubter Winkelbereich |
| R> | verbotener Winkelbereich |

## Patentansprüche

1. Getriebestufe, insbesondere eines Fahrzeugsitzes, welche als Reibradgetriebestufe ausgebildet ist, mit
a) einem Gehäuse (5),
b) wenigstens einem Antrieb (12),
c) wenigstens einem Abtrieb (14), welcher gegenüber dem Antrieb (12) beabstandet ist um eine Exzentrizität (e), deren Lage bezüglich des Gehäuses (5) räumlich fest ist,
d) und wenigstens einer Kugel (15) oder einem anderen Wälzkörper, die zur Kraftübertragung zwischen Antrieb (12) und Abtrieb (14) vorgesehen ist, wobei
e) die Getriebestufe (10) mit wenigstens zwei unterschiedlichen, richtungsabhängigen und/oder schaltbaren Übersetzungsverhältnissen ausgebildet ist,
**dadurch gekennzeichnet, dass**
f) die Kugel (15) oder der andere Wälzkörper in einem Keilspalt zwischen Antrieb (12) und Abtrieb (14) angeordnet und innerhalb des Keilspaltes beweglich ist, insbesondere in den Keilspalt hinein und aus dem Keilspalt heraus beweglich ist.

2. Getriebestufe nach Anspruch 1, **dadurch gekennzeichnet, dass** die - vorzugsweise als Wälzlager ausgebildeten - Lager (8a, 14a) für Antrieb (12) und Abtrieb (14) an räumlich festen Stellen im Gehäuse (5) angeordnet sind.

3. Getriebestufe nach Anspruch 2, **dadurch gekennzeichnet, dass** das Gehäuse (5) unterschiedliche Lagersteifigkeiten für die Lager (8a, 14a) des Antriebs (12) und des Abtriebs (14) und/oder für unterschiedliche Antriebsrichtungen und/oder unterschiedliche Raumrichtungen aufweist.

4. Getriebestufe nach einem der vorhergehenden Ansprüche, **dadurch gekennzeichnet, dass** ein Anpresselement (31) vorgesehen ist, insbesondere eine - gegebenenfalls gehäusefeste - Feder und/oder ein Magnet, welches die Kugel (15) oder den anderen Wälzkörper in den Keilspalt zwischen Antrieb (12) und Abtrieb (14) drückt oder zieht.

5. Getriebestufe nach einem der vorhergehenden Ansprüche, **gekennzeichnet durch** die Ausbildung als Freilauf, welcher sich **durch** ein am Abtrieb (14) eingeleitetes Moment öffnet, indem sich die Kugel (15) oder der andere Wälzkörper aus dem Keilspalt zwischen Antrieb (12) und Abtrieb (14) herausbewegt.

6. Getriebestufe nach einem der vorhergehenden Ansprüche, **gekennzeichnet durch** die Ausbildung als schaltbare Kupplung, bei welcher die Kugel (15) oder der andere Wälzkörper elektrisch, beispielsweise mittels einer Rückhaltevorrichtung (37) und einem Anpresselement (31), von denen wenigstens eines als Elektromagnet ausgebildet ist, und/oder mechanisch, beispielsweise mittels einer extern ansteuerbaren Steuergabel (41) oder einem Kugelführungsring (43), welcher die Kugel (15) oder den anderen Wälzkörper führt und welcher in Reibkontakt zum Antrieb (12) steht, aus dem Keilspalt zwischen Antrieb (12) und Abtrieb (14) heraus oder in diesen hinein bewegt wird.

7. Getriebestufe nach einem der vorhergehenden Ansprüche, **dadurch gekennzeichnet, dass** nach Abschluss der Antriebsbewegung der Antrieb (12) um einen vorgegebenen Winkel zurückgedreht wird, um die Kugel (15) oder den anderen Wälzkörper aus dem Keilspalt zwischen Antrieb (12) und Abtrieb (14) heraus zu bewegen.

8. Getriebestufe nach einem der vorhergehenden Ansprüche, **dadurch gekennzeichnet, dass** am Antrieb (12) und/oder am Abtrieb (14) eine Kontur vorgesehen ist, insbesondere eine Nut, innerhalb derer die Kugel (15) oder der andere Wälzkörper läuft.

9. Getriebestufe nach einem der vorhergehenden Ansprüche, **dadurch gekennzeichnet, dass** zur Erzeugung der unterschiedlichen Übersetzungsverhältnisse unterschiedliche effektive Radien der Kugeln (15) oder anderen Wälzkörper verwendet werden.

10. Getriebestufe nach einem der vorhergehenden Ansprüche, **dadurch gekennzeichnet, dass** zur Erzeugung der unterschiedlichen Übersetzungsverhältnisse zwei unterschiedliche Kugeln (15) und/oder Konturen an Antrieb (12) und/oder Abtrieb (14) verwendet werden.

11. Getriebestufe nach Anspruch 8 und 10, **dadurch gekennzeichnet, dass** zwei unterschiedlich große Kugeln (15) vorgesehen sind, welche in einer gemeinsamen Nut des Antriebs (12) oder Abtriebs (14) laufen.

12. Kombinierte Getriebestufe mit wenigstens zwei Getriebestufen nach einem der vorhergehenden Ansprüche.

13. Stellantrieb, insbesondere für ein Fahrzeug, insbesondere einen Fahrzeugsitz, mit einem Antriebsmotor (7), **gekennzeichnet durch** eine vom Antriebsmotor (7) angetriebene erste Getriebestufe (10) nach einem der vorhergehenden Ansprüche.

14. Fahrzeugsitz (3) mit einem Stellantrieb (1) nach Anspruch 13.

## Claims

1. Gear stage, in particular of a vehicle seat, which is designed as a friction wheel gear stage, with
a) a housing (5),
b) at least one drive (12),
c) at least one output (14), which is spaced apart relative to the drive (12) around an eccentricity (e), the position of which is spatially fixed with respect to the housing (5),
d) and at least one ball (15) or another rolling body, which is provided for power transmission between the drive (12) and the output (14),
wherein
e) the gear stage (10) is designed with at least two different, direction-dependent and/or switchable transmission ratios,
**characterized in that**
f) the ball (15) or the other rolling body is arranged in a wedge gap between drive (12) and output (14) and is moveable within the wedge gap, in particular moveable into the wedge gap and out of the wedge gap.

2. The gear stage according to claim 1, **characterized in that** the bearings (8a, 14a) - preferably designed as roller bearings - for drive (12) and output (14) are arranged at spatially fixed positions in the housing (5).

3. The gear stage according to claim 2, **characterized in that** the housing (5) has different bearing rigidities for the bearings (8a, 14a) of the drive (12) and of the output (14) and/or for different drive directions and/or different spatial directions.

4. The gear stage according to one of the preceding claims, **characterized in that** a press-on element (31) is provided, in particular an - if applicable housing-fixed - spring and/or a magnet, which pushes or pulls the ball (15) or the other rolling body into the wedge gap between drive (12) and output (14).

5. The gear stage according to one of the preceding claims, **characterized by** the free-wheel design, which opens through a torque fed to the output (14), in that the ball (15) or the other rolling body moves out of the wedge gap between drive (12) and output (14).

6. The gear stage according to one of the preceding claims, **characterized by** the design as a switchable coupling, in which the ball (15) or the other rolling body is moved out of the wedge gap between drive (12) and output (14) or into it electrically, for example by means of a restraining device (37) and a press-on element (31), at least one of which is designed as an electromagnet, and/or mechanically, for example by means of an externally activated control fork (41) or a ball guide ring (43), which guides the ball (15) or the other rolling body and which is in frictional contact with the drive (12).

7. The gear stage according to one of the preceding claims, **characterized in that**, after completion of the drive movement, the drive (12) is turned back by a predetermined angle, in order to move the ball (15) or the other rolling body out of the wedge gap between drive (12) and output (14).

8. The gear stage according to one of the preceding claims, **characterized in that** a contour, in particular a groove, is provided on the drive (12) and/or on the output (14), within which the ball (15) or the other rolling body moves.

9. The gear stage according to one of the preceding claims, **characterized in that** different effective radii of the balls (15) or other rolling bodies are used to generate the different transmission ratios.

10. The gear stage according to one of the preceding claims, **characterized in that** two different balls (15) and/or contours on drive (12) and/or output (14) are used to generate the different transmission ratios.

11. The gear stage according to claims 8 and 10, **characterized in that** two differently sized balls (15) are provided, which move in a common groove of the drive (12) or output (14).

12. Combined gear stage with at least two gear stages according to one of the preceding claims.

13. Actuating drive, in particular for a vehicle, in particular a vehicle seat, with a drive motor (7), **characterized by** a first gear stage (10) driven by the drive motor (7) according to one of the preceding claims.

14. Vehicle seat (3) with an actuating drive (1) according to claim 13.

## Revendications

1. Étage d'engrenage, en particulier pour un siège de véhicule, constitué sous forme d'un étage d'engrenage à roue de friction, comportant
a) un boîtier (5),
b) au moins un élément d'entraînement (12),
c) au moins un élément entraîné (14) espacé par rapport à l'élément d'entraînement (12) par une excentricité (e), dont la position par rapport au boîtier (5) est fixe dans l'espace,
d) et au moins une bille (15) ou un autre élément roulant qui est agencé(e) pour effectuer un transfert de force entre l'élément d'entraînement (12) et l'élément entraîné (14), dans lequel
e) l'étage d'engrenage (10) est constitué avec au moins deux rapports d'engrenage différents, à sens défini et/ou commutables,
**caractérisé en ce que**
f) la bille (15) ou autre élément roulant est agencé (e) dans une fente en coin entre l'élément d'entraînement (12) et l'élément entraîné (14) et est mobile dans la fente en coin, et est en particulier mobile vers l'intérieur et vers l'extérieur de la fente en coin.

2. Étage d'engrenage selon la revendication 1, **caractérisé en ce que** les paliers (8a, 14a) de l'élément d'entraînement (12) et de l'élément entraîné (14) sont préférablement conformés comme des paliers à roulement, agencés à des positions fixes dans le boîtier (5).

3. Étage d'engrenage selon la revendication 2, **caractérisé en ce que** le boîtier (5) présente différentes rigidités de palier pour les paliers (8a, 14a) de l'élément d'entraînement (12) et de l'élément entraîné (14) et/ou dans différentes directions d'entraînement et/ou directions spatiales.

4. Étage d'engrenage selon une des revendications précédentes, **caractérisé en ce qu'**un élément de compression (31) est pourvu, en particulier un aimant et/ou un ressort, éventuellement fixé au boîtier, qui pousse ou tire sur la bille (15) ou autre élément roulant dans la fente en coin entre l'élément d'entraînement (12) et l'élément entraîné (14).

5. Étage d'engrenage selon une des revendications précédentes, **caractérisé par** une construction à roue libre qui s'ouvre sous l'action d'un moment appliqué à l'élément entraîné (14), moyennant quoi la bille (15) ou autre élément roulant sort de la fente en coin entre l'élément d'entraînement (12) et l'élément entraîné (14).

6. Étage d'engrenage selon une des revendications précédentes, **caractérisé par** une construction sous forme d'un accouplement commutable, dans lequel la bille (15) ou autre élément roulant est sortie ou entrée de la fente en coin entre l'élément d'entraînement (12) et l'élément entraîné (14) électriquement, par exemple à l'aide d'un dispositif de retenue (37) et d'un élément de pression (31), dont au moins un est constitué sous forme d'un électroaimant, et/ou mécaniquement, par exemple à l'aide d'une fourchette de commande à contrôle externe (41) ou d'une bague de guidage de bille (43), qui guide la bille (15) ou autre élément roulant et est en contact par friction avec l'élément d'entraînement (12).

7. Étage d'engrenage selon une des revendications précédentes, **caractérisé en ce que** l'élément d'entraînement (12) est tourné en sens inverse selon un angle prédéterminé lorsque le mouvement d'entraînement est achevé, pour faire sortir la bille (15) ou autre élément roulant de la fente en coin entre l'élément d'entraînement (12) et l'élément entraîné (14).

8. Étage d'engrenage selon une des revendications précédentes, **caractérisé en ce qu'**un contour est pourvu sur l'élément d'entraînement (12) et/ou sur l'élément entraîné (14), en particulier une rainure, dans lequel circule la bille (15) ou autre élément roulant.

9. Étage d'engrenage selon une des revendications précédentes, **caractérisé en ce que** des billes (15) ou autres éléments de roulement à rayons efficaces différents sont utilisé(e)s pour obtenir les différents rapports d'engrenage.

10. Étage d'engrenage selon une des revendications précédentes, **caractérisé en ce que** deux billes (15) et/ou contours différent(e)s sont utilisé(e)s sur l'élément d'entraînement (12) et/ou l'élément entraîné (14) pour obtenir les différents rapports d'engrenage.

11. Étage d'engrenage selon les revendications 8 et 10, **caractérisé en ce que** deux billes (15) de tailles différentes sont pourvues et circulent dans une rainure commune de l'élément d'entraînement (12) ou de l'élément entraîné (14).

12. Étage d'engrenage combiné comportant au moins deux étages d'engrenage selon une des revendications précédentes.

13. Actionneur, en particulier pour un véhicule, et en particulier pour un siège de véhicule, comportant un moteur d'entraînement (7), **caractérisé par** un premier étage d'engrenage (10) entraîné par le moteur d'entraînement (7) selon une des revendications précédentes.

14. Siège de véhicule (3) comportant un actionneur (1) selon la revendication 13.
